# EUROPÄISCHE PATENTANMELDUNG

(11) **EP 2 184 659 A1**
(43) Veröffentlichungstag der Anmeldung: **12.05.2010**
(21) Anmeldenummer: 09012062.7
(22) Anmeldetag: 23.09.2009
(51) Int. Cl.: G05B 19/423, B25J 9/16, B25J 13/08

(54) **Verfahren und Vorrichtung zum Einlernen ("Teachen") eines Industrieroboters mit der "Lead-through"-Technik**

(30) Priorität: 10.10.2008 DE 102008050930; 19.12.2008 DE 102008063680
(71) Anmelder: ABB AG, 1109 Wien (AT)
(72) Erfinder: Roth, Michael, 1230 Wien (AT); Kohlmaier, Martin, 2540 Bad Völsau (AT); Krappinger, Rainer, 2724 Stollhof (AT)
(74) Vertreter: Partner, Lothar

(57) **Zusammenfassung**

Die Erfindung betrifft ein Verfahren zum Einlernen ("Teach-In") von Bewegungsabläufen eines Industrieroboters (10) mit einem Standsockel (12) und wenigstens einem beweglichen Gelenkarm (14) das gemäß den folgenden Schritten arbeitet:
Anbringung eines Meßsystems (22) mit Messkopf am freien Ende des Gelenkarms (14); Anbringung eines Haltegriffes (28) an dem mit dem Meßsystem (22) versehenen freien Endes des Gelenkarms (14); Manuelle Betätigung des Haltegriffes (28) durch eine Bedienperson zwecks Einlernen des vorgesehenen Bewegungsablaufes des Roboters (10); Erfassung von Positionen des am freien Ende des Gelenkarms (14) angeordneten Haltegriffes (28) mittels des Meßsystems (22) mit Messkopf; Transformation der erfassten Positionen in Koordinatendaten; Übermittlung der erfassten Koordinatendaten an ein Kontroll- und Steuersystem; Speicherung der übermittelten Koordinatendaten in dem Kontroll- und Steuersystem; Auswertung der gespeicherten Koordinatendaten durch das Kontroll- und Steuersystem und Speicherung der ausgewerteten Daten als Bewegungsprogramm des Roboters (10). Ferner betrifft die Erfindung einen entsprechend ausgestatteten Industrieroboter.

## Beschreibung

Die Erfindung betrifft ein Verfahren zum Einlernen ("Teachen") von Bewegungsabläufen eines Industrieroboters mit einem Standsockel und wenigstens einem beweglichen Gelenkarm.

Zur Bewegung eines Industrieroboters wird üblicherweise ein Bediengerät oder eine ähnliche Einrichtung verwendet, die von einer Bedienperson gehandhabt wird. Die Bewegung des Roboters, zum Beispiel von einer Position zu einer anderen oder entlang einer festgelegten Bahn wird dabei durch einen am Bediengerät hierfür vorgesehenen Joystick oder mittels Tastatur erzeugten Befehl veranlasst, das heißt der Roboter folgt den Bewegungsbefehlen entsprechend der Regelgrößen der Tastatur oder des Joysticks. Üblicherweise ist die Verbindung zwischen Bediengerät und Steuerung permanent und wird nicht getrennt.

Für die Definition einer Bahn ist das Bewegen des Roboters beziehungsweise seines Gelenkarms von einer Position zu einer anderen unabdinglich. Das Teachen einer Position, zum Beispiel zur Aufnahme eines Werkzeugs, erfordert Erfahrung und Feingefühl des Programmierers, damit es nicht zu einer Beschädigung der Komponenten kommt.

Die Programmierung komplexer Bewegungsbahnen eines Roboters mittels Tastatur oder Joystick kann allerdings zuweilen sehr zeitraubend sein, da jeder Bahnpunkt einzeln definiert werden muß beziehungsweise die Bewegung mittels Joystick sehr ruhig und präzise erfolgen muß, um jegliche Fehler der Bewegungsbahn oder auch bei Abweichungen Beschädigungen zu vermeiden.

Ausgehend von diesem Stand der Technik ist es Aufgabe der Erfindung, ein Verfahren der eingangs gebannten Art anzugeben, das eine einfachere Verfahrensweise gestattet als bisher. Ferner ist es Aufgabe der Erfindung, eine Vorrichtung zur Durchführung des Verfahrens anzugeben, dass eine möglichst einfache Handhabung gestattet.

Diese Aufgabe wird erfindungsgemäß gelöst durch die Merkmale des Anspruchs 1 sowie des Anspruchs 9.

Demgemäß ist das erfindungsgemäße Verfahren als manueller Einlernvorgang vorgesehen, wobei der Roboter von Hand geführt wird und die jeweils erreichten Bahnpunkte elektronisch gespeichert werden, um nach Beendigung des Einlernvorgangs aus diesen Bahnkoordinatendaten eine Bewegungsbahn zu erhalten. Im Einzelnen sind folgende Schritte vorgesehen:
a) Anbringung eines Meßsystems mit Messkopf am freien Ende des Gelenkarms;
b) Anbringung eines Handhabungsgerätes an dem mit dem Meßsystem versehenen freien Endes des Gelenkarms;
c) Manuelle Betätigung des Handhabungsgerätes durch eine Bedienperson zwecks Einlernen des vorgesehenen Bewegungsablaufes des Roboters;
d) Erfassung jeder Position des am freien Ende des Gelenkarms angeordneten Handhabungsgerätes mittels des Meßsystems mit Messkopf;
e) Transformation der erfassten Positionen in Koordinatendaten;
f) Übermittlung der erfassten Koordinatendaten an ein Kontroll- und Steuersystem;
g) Speicherung der übermittelten Koordinatendaten in dem Kontroll- und Steuersystem;
h) Auswertung der gespeicherten Koordinatendaten durch das Kontroll- und Steuersystem und
i) Speicherung der ausgewerteten Daten als Bewegungsprogramm oder als Punktewolke des Roboters.

Zu a): Um die jeweilige örtliche Position des Roboters und seines Endeffektors eindeutig zu definieren und die zugehörigen Koordinaten zu erfassen, ist es unumgänglich ein Messsystem vorzusehen, das diese Koordinatendaten erfasst und zur Auswertung bringt. Stattdessen kann auch die Kinematik des Roboters als Messsystem genutzt werden.

Zu b): Zur Handhabung des Endeffektors, also des freien Endes des Gelenkarms des Roboters ist ein Griffstück als Handhabungsgerät vorgesehen, mittels welchem die manuelle Führung präzise ermöglicht ist, wobei auch eine Befehlsübertragung an die Steuerung des Roboters stattfinden kann.

Zu c): Die Bewegung des Handhabungsgerätes durch die Einlernperson ist das Grundprinzip der vorliegenden Erfindung.

Zu d): Entsprechend der Erfindung ist es unumgänglich im Hinblick auf die erforderliche Präzision der einzustellenden Bewegungsabläufe des Roboters, dass mittels des am freien Ende des Gelenkarms des Roboters montierten Messkopfes jede Position hinsichtlich ihrer Koordinaten exakt erfasst wird. Alternativ kann auch der Tool-Center-Point erfasst werden, das heißt der Werkzeugarbeitspunkt des Endeffektors; dies geschieht durch die Steuerung des Industrieroboters selbst.

Zu e): Ferner ist es erforderlich die erfassten Koordinaten der jeweiligen Position in elektronisch verarbeitbare Koordinatendaten zu transformieren, aus welchen später die Bewegungsbahn abgeleitet werden kann, wobei dies auch die Robotersteuerung gewährleistet werden kann.

Zu f): Die konkreten Koordinatendaten sind vom Roboter zwecks Auswertung an ein Kontroll- und Steuersystem zu übertragen, welches

Zu g): In dem Kontroll- und Steuersystem werden die jeweiligen Koordinatendaten gespeichert für ihre anschließende Verarbeitung.

Zu h): Entweder mit dem Speichern, das heißt quasi synchron ("realtime") oder nach Beendigung der Erfassung der Bahnkoordinaten erfolgt deren Auswertung.

Zu i): Als letzter Punkt des Verfahrens erfolgt schließlich die Zusammenführung der einzelnen Bahnkoordinatendaten zu einer Bewegungsbahn als Bewegungsprogramm.

Kurz gefasst kann das erfindungsgemäße Verfahren zum Einlernen ("Teachen") von Bewegungsabläufen eines Industrieroboters als kombiniertes manuelles und elektronisches Verfahren bezeichnet werden, da die relevanten Daten zunächst manuell, das heißt durch manuelle Bewegung des Handhabungsgerätes, generiert und anschließend oder realtime elektronisch verarbeitet und als Bewegungsprogramm gespeichert werden.

Gemäß einer zweckmäßigen Ausführungsvariante des erfindungsgemäßen Verfahrens kann vorgesehen sein, dass an Stelle der Übermittlung der vom Meßsystem erfassten und transformierten Koordinatendaten an ein Kontroll- und Steuersystem zunächst deren Speicherung in dem Meßsystem erfolgt und dass danach die Koordinatendaten ausgelesen und an das Kontroll- und Steuersystem übermittelt werden, wo sie ausgewertet und als Bewegungsprogramm zur Steuerung des Roboters gespeichert werden.

Gemäß einer weiteren vorteilhaften Variante des erfindungsgemäßen Verfahrens kann ferner vorgesehen sein, dass sämtliche von dem Meßsystem erfassten Koordinatendaten unmittelbar an einen externen Speicher, zum Beispiel im Kontroll- und Steuersystem übermittelt werden, wo ihre Aufbereitung, wie Transformation, Auswertung und Kompilierung erfolgt.

In vorteilhafter Weiterbildung des erfindungsgemäßen Verfahrens ist vorgesehen, dass die Übertragung der vom Meßsystem erfassten Messgrößen geschützt erfolgt. Hierdurch kann eine Verfälschung des jeweiligen Messwertes vermieden werden.

Gemäß einer besonders bevorzugten Variante des Verfahrens werden wahlweise Einzelpositionen des Handhabungsgerätes oder die Koordinatendaten von kompletten Bahnen erfasst.

Gemäß einer weiteren Ausgestaltung des erfindungsgemäßen Verfahrens erfolgt das Einiernen mittels so genannter Zweihandbedienung. Hierbei können die Koordinatendaten in 6 Dimensionen erfasst werden. Koordinatendaten werden für Roboter immer in 6 Dimensionen erfasst. Mit einer Zweihandbedienung ist es möglich eine koordinierte Bewegung in 6 Dimensionen durchzuführen, das heißt, die Aufbringung von Momenten auf das Messsystem ist einfacher und daher koordinierter.

Entsprechend einer bevorzugten Verfahrensvariante werden die erfassten und ausgewerteten Koordinatendaten von dem Programmierer genutzt, um bei einer Bahnreproduktion die Bewegungsbahn in ein exaktes Bewegungsprogramm umzusetzen.

Bei der Festlegung der Bewegung eines Roboters zwischen zwei Punkten können für das Handhabungsgerät generell wenigstens zwei unterschiedliche Bewegungsformen, nämlich lineare oder achsweise Bewegung gewählt werden.

Mittels des erfindungsgemäßen Verfahrens und seiner Ausführungsvarianten bietet sich dem Anwender eine einfache Möglichkeit zur programmierten Bahnsteuerung des Roboters bei gleichzeitiger Zeitersparnis und präziser Ausführung.

Entsprechend der weiteren Aufgabe der Erfindung ist ein Industrieroboter mit einem Standsockel und wenigstens einem beweglichen Gelenkarm, dessen freies Ende mit Anschlussmitteln versehen ist für den lösbaren Anschluß eines Endeffektors zum Beispiel eines Werkzeuges oder eines sonstigen Gerätes, zugrunde gelegt, für den eine Möglichkeit angegeben werden soll, welche eine einfache Bestimmung der Bewegungsabläufe des Roboters gestattet.

Erfindungsgemäß wird diese Aufgabe durch die Merkmale des Anspruches 9 gelöst. Dementsprechend ist erfindungsgemäß vorgesehen, dass an dem freien Ende des Industrieroboters ein Meßsystem mit einem Messkopf angeordnet ist, welches selbsttätig die jeweiliges Position und Lage des Messkopfes ermittelt und einer Kontroll- und Steuereinheit übermittelt, und dass ferner daran auch ein Handhabungsgerät angeordnet ist, welches zum Einiernen von Bewegungsabläufen des Roboters beziehungsweise des Gelenkarms dient und von der hierfür vorgesehenen Person manuell geführt wird.

Gemäß einer bevorzugten Ausführungsform des erfindungsgemäßen Industrieroboters ist das Meßsystem geschützt in einem Gehäuse am freien Ende des Gelenkarms angeordnet, wo es jederzeit eingesetzt und wieder entnommen werden kann.

Vorteilhafterweise ist hierzu das Meßsystem in einem starren Gehäuse untergebracht, von wo es über geschützt im Gelenkarm des Roboters angeordnete Übertragungsleitungen mit dem Kontroll- und Steuersystem kommuniziert.

Als "Teachgerät" werden zusätzliche Systeme bei einem Handhabungsgerät bezeichnet, welche ergänzend zum elektronischen Bediengerät verwendet werden. Diese Teachgeräte sind mit dem System-Handhabungsgerät, das heißt, sowohl die Mechanik als auch die Steuerung sind fest miteinander verbunden und können nur mit größerem zeitlichem Aufwand entfernt werden, dies gilt auch für Messsysteme welche zum Beispiel zwischen dem Handgelenk eines Handhabungsgeräts und eines Endeffektors angebracht sind.

Üblicherweise muss der Endeffektor mechanisch vom Industrieroboter getrennt werden, um die Komponenten des Messsystems zu demontieren, das bedeutet, dass ein Ablegen des Endeffektors Vorraussetzung ist. Hierdurch wird ein manuelles Einlernen erschwert oder praktisch unmöglich.

Eine klare Verbesserung der Erfindung ist daher **dadurch gekennzeichnet, dass** als Verbindung des Meßsystems mit dem Gelenkarm eine Steck- und/oder Rastverbindung vorgesehen ist. Diese Steck- und/oder Rastverbindung ermöglicht eine einfache, vorzugsweise werkzeuglose Montage und Demontage des Meßsystems.

Gemäß einer bevorzugten Ausführungsform des erfindungsgemäßen Industrieroboters ist das am freien Ende des Gelenkarms angeordnete Meßsystem demontierbar, ohne dass es der vorherigen Demontage des Endeffektors bedarf.

Ein solches Meßsystem kann zum Beispiel ein Kraftmeßsystem zur Messung der aufgenommenen Massen beziehungsweise angreifenden Kräfte, zum Beispiel eines Greifers sein, aber auch Einrichtungen zur Messung der Winkelstellung des Gelenkarmes oder seiner Orientierung. Zusätzlich bietet ein solches Messsystem die Möglichkeit zur Kalibrierung, um nur die zusätzlichen Kräfte messen zu können.

Diese und weitere vorteilhafte Ausgestaltungen und Verbesserungen der Erfindung sowie besondere Vorteile sind Gegenstand der Unteransprüche.

Anhand eines in der beigefügten Zeichnung dargestellten Ausführungsbeispieles der Erfindung sollen die Erfindung, vorteilhafte Ausgestaltungen und Verbesserungen der Erfindung sowie besondere Vorteile der Erfindung näher erläutert und beschrieben werden.

### Es zeigen:

- Fig. 1: einen Industrieroboter gemäß dem Stand der Technik,
- Fig. 2: einen am freien Ende des Gelenkarms eines Industrieroboters angeordneten Meßkopf gemäß der Erfindung von der Seite,
- Fig. 3: ein Gehäuse mit einem darin angeordneten Meßsystem zur Montage am freien Ende des Gelenkarms eines Industrieroboters
und
- Fig. 4: einen am freien Ende des Gelenkarms eines Industrieroboters angeordneten Meßkopf mit einem daran befestigten Handhabungsgerät gemäß der Erfindung in Schrägansicht von oben.

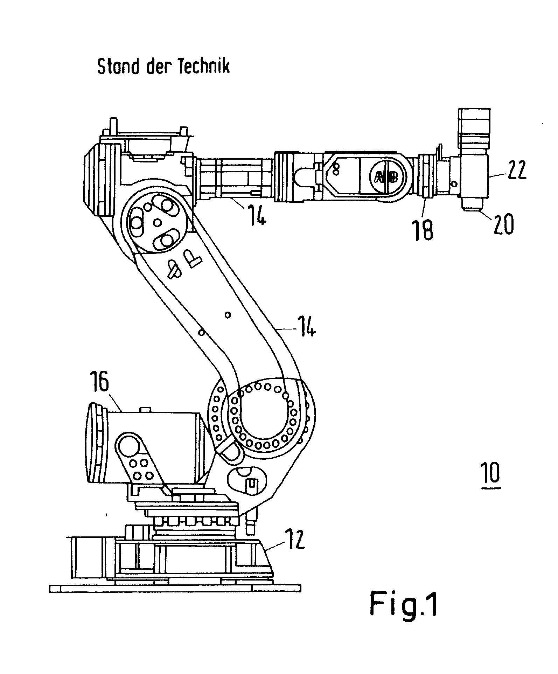

In Fig. 1 ist ein aus dem Stand der Technik bekannter Industrieroboter 10 von der Seite gezeigt, der einen Standsockel 12 mit einem daran angelenkten Gelenkarm 14 sowie mit einem Antrieb 16 aufweist.

An dem freien Ende des Gelenkarms 14 ist ein Flansch 18 vorgesehen, an welchen die verschiedenen vorgesehenen Werkzeuge angeschlossen werden können.

Im gezeigten Beispiel ist zwischen dem Flansch 18 und einem Endeffektor 20, das heißt ein von dem Roboter 10 zu betätigendes beliebiges Werkzeug, ein Meßkopf 22 für den manuellen Einlernvorgang eingefügt, der aber nach erfolgtem Einlernen des Roboters und vor einer bestimmungsgemäßen Betriebsaufnahme zuvor entfernt werden muß. Dies bereitet einen nicht unerheblichen Aufwand hinsichtlich Zeit und Montagearbeit.

Demgemäß liegt der Erfindung die Aufgabe zugrunde, eine technische Lösung zu finden, welche die zeitweise Demontage des Endeffektors 20 von dem Industrieroboter 10, um die Demontage des dazwischen angeordneten Meßsystems 22 zu ermöglichen, welches zwischen Handflansch 18 des Roboters 10 und des Endeffektors 20 angebracht ist, vermeidet.

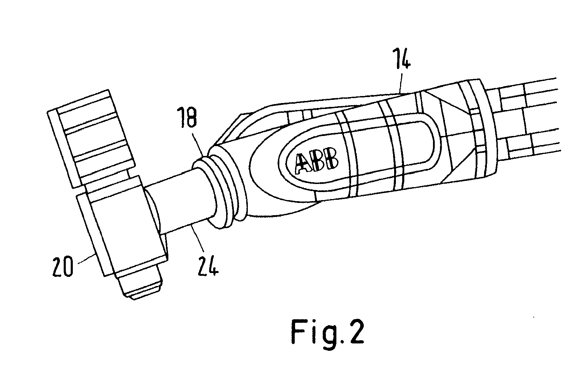

In Fig. 2 ist die technische Lösung dieses bisher unbefriedigend gelösten Problems gezeigt. Dementsprechend ist an dem Abschluß des Gelenkarms 14 bildenden Flansch 18 ein zylindrisches Gehäuse 24 angeflanscht, an welchem wiederum der Endeffektor 20 anschließt.

Diese Lösung besteht erfindungsgemäß in einem besonderen Gehäuse, in welchem das für das Einlernen erforderliche Meßsystem während des Einlernvorgangs positioniert ist, aber anschließend vor Beginn der vorgesehenen Arbeiten mit geringem Aufwand entfernt werden kann. Durch dieses nur bei Bedarf im Roboterarm 14 positionierbare Meßsystem 22 ist dessen Montage und Demontage vereinfacht und ebenso der zeitliche Aufwand gegenüber vorher erheblich reduziert.

Das Meßsystem 22 wird in ein starres Gehäuse 24 eingebaut, wobei die Übertragung der jeweiligen Messgrößen durch einen inneren Aufbau gewährleistet ist. Auf diese Weise ist es möglich, mit nur wenigen Handgriffen das Meßsystem 22 aus der Verbindung zu lösen, ohne vorher den Endeffektor 20 entfernen zu müssen.

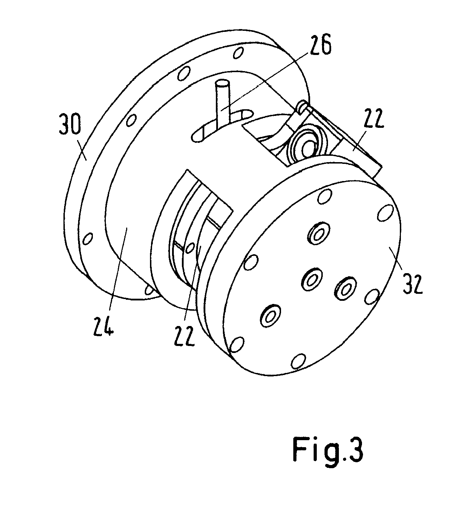

In Fig. 3 ist das Gehäuse 24 in Schrägansicht dargestellt, in welchem das Meßsystem 22 zeitweilig, zum Beispiel für die Dauer des Einlernens, angeordnet ist. Das Messsystem kann nach dem Einlernen aber auch am Roboter verbleiben, um eine Kraftsteuerung für einen Prozess zu ermöglichen. Das Gehäuse ist zylindrisch gestaltet und hat zwei Stirnseiten, von denen die eine Stirnseite mit einem Flansch 30 zur Montage am Flansch 18 am freien Ende des Gelenkarms 14 des Industrieroboters 10 vorbereitet ist. Die andere Stirnseite ist ebenfalls mit einem Flansch 32 versehen, der zum Anschluß des Endeffektors 20 vorgesehen ist.
Die lagesichere Positionierung des Meßsystems 22 in dem Gehäuse 24 ist erfindungsgemäß dadurch vereinfacht, dass das Meßsystem 22 mittels einer Rasteinrichtung im Inneren des Gehäuses 24 für die Dauer der Unterbringung in dem Gehäuse 24 gesichert ist. Zur Betätigung der nicht näher gezeigten Rasteinrichtung beziehungsweise des ebenfalls nicht näher gezeigten Meßsystems 22 dient ein von außen manuell betätigbarer Schwenk- oder Stellhebel 26, der je nach Stellung das Meßsystem 22 in dessen Einbaulage blockiert oder freigibt. Stattdessen kann dies zum Beispiel auch durch Federn gewährleistet werden, welche nach der Positionierung blockiert werden, um eine starre Verbindung zu gewährleisten.

Selbstverständlich kann auch eine Steckverbindung vorgesehen sein, mittels welcher das Meßsystem 22 in dem Gehäuse 24 positioniert ist und das mittels des Stell- beziehungsweise Schwenkhebels 26 gesichert oder entsichert wird.

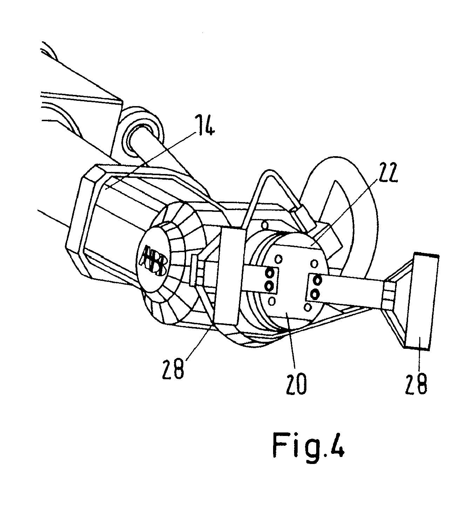

Fig. 4 schließlich zeigt eine Ansicht auf das freie Ende eines Gelenkarms 14 eines Roboters 10, das in erfindungsgemäßer Weise ausgerüstet ist. Am Endeffektor 20 sind beiderseits einander diametral gegenüberliegend angeordnete Haltegriffe 28 befestigt, so dass hiermit ein beidseitiges manuelles Führen des Endeffektors 20 möglich und damit das manuelle Einlernen ("Teachen") auf einfache Weise durchführbar ist.

Dahinter ist der Meßkopf des Meßsystems 22 zu erkennen, der für den Einlernvorgang in dem hier nicht erkennbaren, weil verdeckten Gehäuse 24 untergebracht ist.

Zur Durchführung des erfindungsgemäßen Verfahrens ist ferner ein in den Figuren nicht gezeigtes Kontroll- und Steuersystem, welches wahlweise dem betreffenden Roboter 10 zugeordnet ist oder für alle beziehungsweise zumindest für eine Gruppe von Robotern 10 vorgesehen ist und deren Steuerung übernimmt.

### Bezugszeichenliste

- 10: Industrieroboter
- 12: Standsockel
- 14: Gelenkarm
- 16: Antrieb
- 18: Flansch
- 20: Endeffektor
- 22: Meßsystem
- 24: Gehäuse (für Meßsystem)
- 26: Stellhebel
- 28: Haltegriff
- 30: Flansch (zum Roboter)
- 32: Flansch (zum Endeffektor)

## Patentansprüche

1. Verfahren zum Einlernen ("Teach-In") von Bewegungsabläufen eines Industrieroboters (10) mit einem Standsockel (12) und wenigstens einem beweglichen Gelenkarm (16) mit den folgenden Schritten:
a. Anbringung eines Meßsystems (22) mit Messkopf am freien Ende des Gelenkarms (14);
b. Anbringung eines Handhabungsgerätes (28) am Endeffektor 20) an dem mit dem Meßsystem (22) versehenen freien Endes des Gelenkarms (14);
c. Manuelle Betätigung des Handhabungsgerätes (28) durch eine Bedienperson zwecks Einlernen des vorgesehenen Bewegungsablaufes des Roboters (10);
d. Erfassung jeder Position des am freien Ende des Gelenkarms (14) angeordneten Handhabungsgerätes (28) mittels des Meßsystems (22) mit Messkopf;
e. Transformation der erfassten Positionen in Koordinatendaten;
f. Übermittlung der erfassten Koordinatendaten an ein Kontroll- und Steuersystem;
g. Speicherung der übermittelten Koordinatendaten in dem Kontroll- und Steuersystem;
h. Auswertung der gespeicherten Koordinatendaten durch das Kontroll- und Steuersystem und
i. Speicherung der ausgewerteten Daten als Bewegungsprogramm des Roboters (10).

2. Verfahren zum Einlernen ("Teach-In") von Bewegungsabläufen eines Industrieroboters (10) nach Anspruch 1, **dadurch gekennzeichnet, dass** an Stelle der Übermittlung der vom Meßsystem (22) erfassten und transformierten Koordinatendaten an ein Kontroll- und Steuersystem zunächst deren Speicherung in dem Meßsystem (22) erfolgt, dass danach die Koordinatendaten ausgelesen und an das Kontroll- und Steuersystem übermittelt werden, wo sie ausgewertet und als Bewegungsprogramm zur Steuerung des Roboters (10) gespeichert werden

3. Verfahren nach Anspruch 1 oder 2, **dadurch gekennzeichnet, dass** die Übertragung der vom Meßsystem (22) erfassten Meßgrößen geschützt erfolgt, so dass eine Verfälschung des jeweiligen Messwertes vermieden wird.

4. Verfahren nach einem der vorherigen Ansprüche, **dadurch gekennzeichnet, dass** Einzelpositionen des Handhabungsgerätes (28) erfasst werden.

5. Verfahren nach einem der Ansprüche 1 bis 3, **dadurch gekennzeichnet, dass** die Koordinatendaten von kompletten Bahnen erfasst werden.

6. Verfahren nach einem der vorherigen Ansprüche, **dadurch gekennzeichnet, dass** das Einlernen mittels so genannter Zweihandbedienung erfolgt.

7. Verfahren nach Anspruch 6, **dadurch gekennzeichnet, dass** die Koordinatendaten in 6 Dimensionen erfasst werden.

8. Verfahren nach Anspruch 6 oder 7, **dadurch gekennzeichnet, dass** die erfassten und ausgewerteten Koordinatendaten von dem Programmierer genutzt werden, um bei einer Bahnreproduktion die Bewegungsbahn ein exaktes Bewegungsprogramm umzusetzen.

9. Industrieroboter (10) mit einem Standsockel (12) und wenigstens einem beweglichen Gelenkarm (14), dessen freies Ende mit Anschlussmitteln (18) versehen ist für den lösbaren Anschluß eines Endeffektors (20), zum Beispiel eines Werkzeuges oder eines sonstigen Gerätes,
**dadurch gekennzeichnet, dass**
an dem freien Ende des Industrieroboters (10) ein Meßsystem (22) mit einem Messkopf angeordnet ist, welches selbsttätig die jeweiliges Position und Lage des Endeffektors (20) ermittelt und einer Kontroll- und Steuereinheit übermittelt, und dass ferner daran auch ein Handhabungsgerät (28) angeordnet ist, welches zum Einlernen von Bewegungsabläufen des Roboters (10) beziehungsweise des Gelenkarms (14) dient und von der hierfür vorgesehenen Person manuell geführt wird.

10. Industrieroboter nach Anspruch 9, **dadurch gekennzeichnet, dass** das Meßsystem (22) geschützt am freien Ende des Gelenkarms (14) angeordnet ist.

11. Industrieroboter nach einem der Ansprüche 9 bis10, **dadurch gekennzeichnet, dass** das Meßsystem i(22) n einem starren Gehäuse (24) untergebracht ist und über geschützt im Gelenkarm (14) des Roboters (10) angeordnete Übertragungsleitungen mit dem Kontroll- und Steuersystem kommuniziert.

12. Industrieroboter nach einem der Ansprüche 9 bis 11, **dadurch gekennzeichnet, dass** als Sicherung des Meßsystems (22) in dem Gehäuse (24) eine Steck- und/oder Rastverbindung vorgesehen ist.

13. Industrieroboter nach einem der Ansprüche 9 bis 11, **dadurch gekennzeichnet, dass** als Sicherung des Meßsystems (22) in dem Gehäuse (24) eine kraftschlüssige Verbindung vorgesehen ist

14. Industrieroboter nach Anspruch 13, **dadurch gekennzeichnet, dass** ein Federsystem vorgesehen ist, welcher die Sicherung des Meßsystems (22) in dem Gehäuse (24) betätigt.

15. Industrieroboter nach Anspruch 13, **dadurch gekennzeichnet, dass** ein Stell- oder Schwenkhebel (26) vorgesehen ist, welcher die Sicherung des Meßsystems (22) in dem Gehäuse (24) betätigt

16. Industrieroboter nach einem der Ansprüche 9 bis 12, **dadurch gekennzeichnet, dass** das Meßsystem (22) demontierbar ist, ohne dass es der vorherigen Demontage des Endeffektors (20) bedarf.
